# EUROPEAN PATENT SPECIFICATION

(11) **EP 0 512 981 B1**
(45) Date of publication and mention of the grant of the patent: **17.03.1999**
(21) Application number: 90902480.4
(22) Date of filing: 16.01.1990
(51) Int. Cl.: B65B 25/02, B65B 67/08, B65B 13/00

(54) **METHOD AND APPARATUS FOR SECURING A DECORATIVE COVER ABOUT A FLOWER POT**
VORRICHTUNG UND VERFAHREN ZUM BEFESTIGEN EINER DEKORATIVEN UMHÜLLUNG AN EINEM BLUMENTOPF
PROCEDE ET APPAREIL SERVANT A FIXER UN REVETEMENT DECORATIF AUTOUR D'UN POT DE FLEURS

(30) Priority: 24.02.1989 US 315169
(43) Date of publication of application: 19.11.1992
(73) Proprietor: SOUTHPAC TRUST INTERNATIONAL, Inc., not individually, but as Trustee of the Family Trust, Rarotonga (CK)
(72) Inventor: WEDER, Donald, E., Highland, IL 62249 (US)
(74) Representative: Baillie, Iain Cameron
(86) International application number: US9000290
(87) International publication number: WO9009924

(56) References cited:
- US-A- 2 514 038
- US-A- 2 924 926
- US-A- 3 431 706
- US-A- 3 531 910
- US-A- 3 974 762
- US-A- 4 470 241
- US-A- 4 555 893
- US-A- 4 572 251
- US-A- 4 733 521

## Description

### Field of the Invention

The present invention relates generally to a method and to an apparatus, both for applying a sheet of material generally about the outer peripheral surface of a flower pot utilizing a band applicator.

U.S. Patent No. 2,924,926 discloses a device for securing a closure to a container by means of an elastomeric band encircling the container and engaging a peripheral portion of a closure of sheet material which covers one end of the container and overlies the sides of the container, the elastomeric band engaging the overlying peripheral portion of the closure to press same against the sides of the container.

U.S. Patent No. 3,974,762 discloses an apparatus for disposing rubber bands around a movable fixture in preparation for banding of a produce bunch, including vertically articulated pins disposed around the periphery of a produce receiving opening, the pins being connected at their bottom ends to a vertically articulated spring-supported platform.

### Summary of the Invention

The present invention provides a method for securing a material generally about the outer peripheral surface of a flower pot utilizing a band applicator with an object opening adapted to substantially automatically apply a band about an object placed in the object opening, comprising: forming the material generally about the outer peripheral surface of the flower pot; placing the flower pot with the material formed generally about the outer peripheral surface thereof into the object opening in the band applicator and utilizing the band applicator to apply the band about the material disposed generally about the outer peripheral surface of the flower pot, the band cooperating to secure the material in position disposed generally about the outer peripheral surface of the flower pot; and removing the flower pot with the material secured thereto by the band from the object opening in the band applicator.

The present invention also provides an apparatus for securing a sheet of material generally about the outer peripheral surface of a flower pot, comprising: a cover forming device having a flower pot opening shaped and sized to receive a flower pot, the sheet of material being placeable generally over the flower pot opening and the flower pot being moveable through the flower pot opening, the flower pot engaging the material placed over the flower pot opening and the sheet of material being formed generally about the outer peripheral surface as the flower pot is moved through the flower pot opening; and a band applicator having an object opening positioned near the cover forming device with the object opening being generally positioned with respect to the flower pot opening whereby the flower pot with the material disposed thereabout is moveable through the flower pot opening and into the object opening, the band applicator being adapted to apply a band about the material disposed generally about the outer peripheral surface of the flower pot whereby the band cooperates to secure the material in position disposed generally about the outer peripheral surface of the flower pot.

The invention also includes a method utilizing a cover forming device to form a decorative cover for a flower pot and securing the decorative cover to the flower pot by automatically applying a band from an automatic band applicator wherein the cover forming device comprises a platform having a support surface and a flower pot opening formed therethrough which intersects the support surface and wherein the automatic band applicator is provided with an object opening for receiving at least a portion of the flower pot having the decorative cover disposed thereabout such that a band is automatically positioned about the decorative cover while the decorative cover is maintained in position about the flower pot by the cover forming device, the method comprising the steps of: providing a flower pot having an outer peripheral surface and an upper opening; providing a sheet of material; disposing the sheet of material upon the support surface of the platform of the cover forming device and over the flower pot opening therein, wherein the sheet of material is supported upon the support surface of the platform; providing a band in the band applicator wherein the object opening in the band applicator is substantially aligned with the flower pot opening in the support surface of the cover forming device; placing the flower pot adjacent the sheet of material disposed over the flower pot opening in the support surface of the cover forming device; moving the flower pot and the sheet of material through the flower pot opening in the cover forming device to form the sheet of material into a decorative cover extending generally about the outer peripheral surface of the flower pot while permitting the opening of the flower pot to remain open; moving the flower pot having the decorative cover held in place about the outer peripheral surface thereof by the cover forming device into the object opening in the band applicator; automatically applying the band about the decorative cover with the band applicator to secure the decorative cover about the outer peripheral surface of the flower pot so that the opening of the flower pot remains substantially uncovered by the decorative cover while the flower pot having the decorative cover extending generally about the outer peripheral surface of the flower pot is disposed in the object opening in the band applicator and held in place by the cover forming device; and removing the flower pot with the decorative cover secured thereto by the band from the object opening in the band applicator and from the flower pot opening in the support surface of the cover forming device.

The invention also includes a method for securing a sheet of material about the outer peripheral surface of a flower pot wherein the flower pot includes a bottom and an opening extending through an upper end thereof, the method comprising: providing the flower pot; providing the sheet of material; providing a cover former having an opening for forming the sheet of material into a decorative cover about the flower pot; providing a band applicator having an object opening for automatically applying a band; moving the sheet of material and the flower pot into the opening of the cover former to form the sheet of material into a decorative cover which substantially encompasses at least the outer peripheral surface of the flower pot; moving the flower pot, having the decorative cover held in place about at least the outer peripheral surface of the flower pot by the cover former, into the object opening in the band applicator; and automatically positioning the band about the decorative cover for securing the decorative cover in position about at least the outer peripheral surface of the flower pot such that the opening formed through the upper end of the flower pot remains substantially uncovered by the decorative cover.

The invention also includes an apparatus for securing a sheet of material generally about the outer peripheral surface of a flower pot while permitting the opening of the flower pot to remain open, the apparatus comprising: a cover forming device for forming and holding the sheet of material generally about the outer peripheral surface of the flower pot, the cover forming device comprising a platform having a flat upper support surface and a platform opening formed therethrough which intersects the support surface, wherein the sheet of material is disposed over the flat upper support surface and over the platform opening, and wherein the sheet of material supported upon said surface is substantially flat while being supported thereupon; and an automatic band applicator having an object opening positioned near and spaced a distance from the cover forming device with the object opening being generally positioned with respect to the platform opening whereby the flower pot with the sheet of material disposed thereabout is moveable through the platform opening and into the object opening, the band applicator automatically applying a band about the sheet of material disposed generally about the outer peripheral surface of the flower pot whereby the band cooperates to secure the sheet of material in position disposed generally about the outer peripheral surface of the flower pot while permitting the opening of the flower pot to remain open, the cover forming device being disposed generally above the band applicator and the flat upper support surface of the cover forming device supporting the sheet of material wherein the supported sheet of material is substantially flat, the cover forming deice thereafter forming the sheet of material generally about the outer peripheral surface of the flower pot when the flower pot is placed upon the sheet of material disposed over the platform opening and the flower pot and sheet of material are simultaneously moved into the platform opening, the cover forming device holding the sheet of material about the outer peripheral surface of the flower pot prior to the flower pot with the sheet of material being disposed into the object opening in the band applicator, the cover forming device holding the sheet of material generally about the outer peripheral surface of the flower pot and permitting the opening in the flower pot to remain open while the flower pot with the sheet of material disposed thereabout is disposed in the object opening in the band applicator.

### Brief Description of the Drawings

Figure 1 is a sectional, diagrammatic view illustrating a flower pot generally positioned above a sheet of material and a band applicator in position for applying the sheet of material generally about the outer peripheral surface of the flower pot.

Figure 2 is similar to Figure 1 but showing the flower pot moved into the object opening of the band applicator with the sheet of material held in place about the outer peripheral surface of the flower pot by a band.

Figure 3 is a sectional, diagrammatic view showing a system for automatically feeding the material to be applied about the flower pot to the band applicator.

### Detailed Description of the Invention

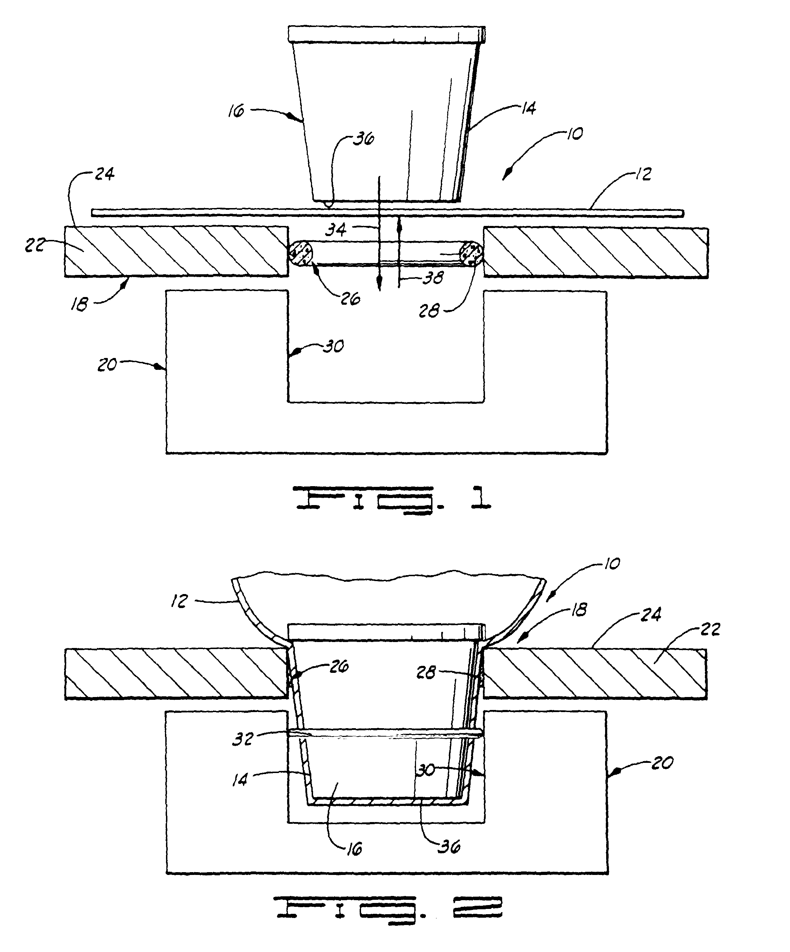

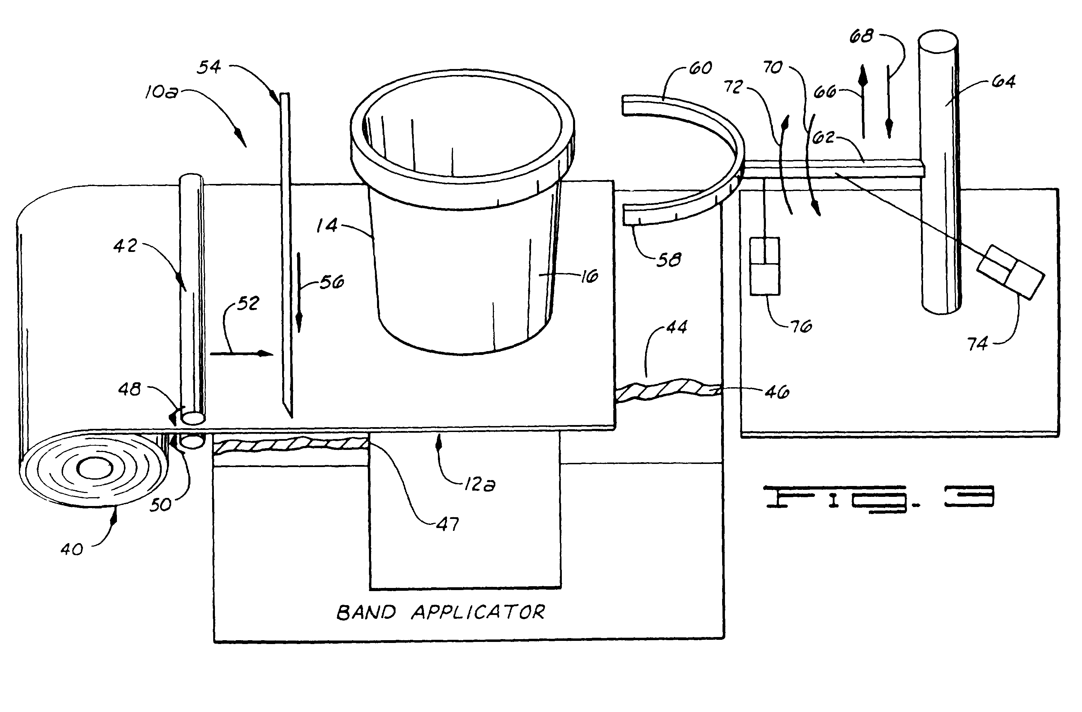

Shown in Figures 1 and 2 and designated therein by the general reference numeral 10 is a system for securing a sheet of material 12 generally about an outer peripheral surface 14 of a flower pot 16 generally for the purpose of providing a decorative cover for the flower pot 16. The system 10 includes a cover forming device 18 and a band applicator 20.

The cover forming device 18 comprises a platform 22 having an upper support surface 24 and a flower pot opening 26 which is formed therethrough and intersects the support surface 24. A generally circularly shaped applicator 28 is supported on the platform 22 and the applicator 28 preferably is constructed of a foam-like material adapted to engage the material and the flower pot without damaging the material or the flower pot. The opening through the applicator 28 forms the flower pot opening 26. A cover forming device which is constructed and operates like the cover forming device 18 is described in detail in U.S. Patent No. 4,733,521 entitled COVER FORMING APPARATUS, incorporated specifically herein by reference.

The sheet of material 12 may be a shape sustaining material such as a foil for example or a non-shape sustaining cellophane or processed organic polymer film material such as a processed organic polymer film like a polypropylene film for example. The term "processed organic polymer film" as used herein means a man-made resin such as a polypropylene as opposed to naturally occurring resins such as cellophane. A processed organic polymer film is relatively strong and not subject to tearing (substantially non-tearable), as might be the case with paper or foil. The processed organic polymer film is a substantially linearly linked processed organic polymer film and is a synthetic linear chain organic polymer where the carbon atoms are substantially linearly linked. Such films are synthetic polymers formed or synthesized from monomers. Further, a relatively substantially linearly linked processed organic polymer film is virtually waterproof which may be desireable in many applications which is not the case with an untreated paper, for example, unless the paper is treated with a water resistant coating or impregnated with a water resistant material or laminated with such water resistant material. It also should be noted that some papers, such as long fiber papers, are substantially resistant to tearing (substantially non-tearable when used in accordance with the present invention). In addition, a relatively thin film of a substantially linearly linked processed organic polymer does not substantially deteriorate in sunlight. Processed organic polymer films having carbon atoms, both linearly linked and cross linked, and some cross linked polymer films, also may be suitable for use in the present invention provided such films are substantially flexible, and can be made in a sheet-like format for forming into the package 10 of the present invention.

A decorative pattern, such as a solid color and/or an embossed pattern, and/or other decorative surface ornamentation may be applied to the inner surface and/or the outer surface of the container 14.

The flower pot cover 10 may be constructed of a single sheet of material or a plurality of sheets of material. When constructed of a plurality of sheets of material, each sheet of material has a thickness in a range of from less than about 1.0 mil (0.0254 mm) to about 2.5 mils (0.0635 mm). However, the upper limit on the thickness of each sheet of material could be as high as 20.0 mils (0.508 mm) depending on the type of material selected. Further, the resulting flower pot cover has a thickness in a range of from less than about 1.0 mils (0.0254 mm) to about 2.5 mils (0.0635 mm) which could be as high as 20.0 mils (0.508 mm) depending upon the number of sheets of material utilized and the type of materials selected.

The band applicator 20 includes an object opening 30 which is sized to receive a portion of a flower pot. The band applicator 20 is constructed and adapted to substantially automatically apply a band about an object placed within the object opening 30. The term "band" as used herein means any material which may be secured about an object such as the flower pot 16 such as bands commonly referred to as elastic bands or rubber bands and also includes any other type of material such as string or metal or rubber or plastic which may be secured about an object such as the flower pot 16. Band applicators which are constructed to operate like the band applicator 20 described herein are commercially available such as the band applicator available from Rubber Band Technology Limited of Yakima, Washington, U.S.A., and referred to or identified by their mark "Bandmaster". Thus, a detailed description of the construction and operation of the band applicator is not deemed necessary herein.

In general, the sheet of material 12 is formed generally about the outer peripheral surface 14 of the flower pot 16 and the flower pot 16 with the sheet of material 12 formed generally about the outer peripheral surface 14 thereof is placed into the object opening 30 of the band applicator 20. After the flower pot 16 with the sheet of material 12 formed thereabout is placed into the object opening 30, the band applicator 20 is actuated to cause a band 32 to be applied about the material and generally about the outer peripheral surface 14 of the flower pot 16. The band 32 cooperates to secure the sheet of material 12 in position disposed generally about the outer peripheral surface 14 of the flower pot 16. After the band 32 has been applied to the outer peripheral surface 14 and about the sheet of material 12, the flower pot 16 with the sheet of material 12 secured thereto by the band 32 is removed from the object opening 30 and the band applicator 20.

The sheet of material 12 is held in place disposed generally about the outer peripheral surface 14 of the flower pot 16 while the flower pot 16 with the sheet of material 12 is disposed in the object opening and during the applying of the band 32 to the flower pot 16. In some applications, the sheet of material 12 may be held by hand formed generally about the outer peripheral surface 14 of the flower pot 16 while the flower pot 16 with the sheet of material held thereabout is disposed in the object opening 30 for applying band 32 thereto.

As shown in Figures 1 and 2 and in one preferred form, the cover forming device 18 is used to hold the sheet of material 12 in place generally about the outer peripheral surface 14 of the flower pot 16 during the applying of the band 32. The sheet of material 12 is placed on the upper surface 24 of the platform 22 and positioned so that the sheet of material 12 generally is centered over the flower pot opening 26. The flower pot 16 then is positioned generally above the flower pot opening 26 and above the sheet of material 12. The flower pot 16 then is moved in a downwardly direction 34 to a position wherein a lower end 36 of the flower pot 16 engages a central portion of the sheet of material 12. The flower pot 16 then further is moved in the downward direction 34 thereby pushing the flower pot 16 along with a portion of the sheet of material 12 generally in the downwwardly direction 34 and through the flower pot opening 26. The flower pot 16 with the sheet of material 12 formed thereabout further is moved in a downward direction 34 to position the lower end 36 portion of the flower pot 16 generally within the object opening 30 and the band applicator 20. The sheet of material 12 is held in position generally about the outer peripheral surface 14 of the flower pot 16 by the applicator 28. In this position, the band applicator 20 is actuated to apply the band 32 generally about the sheet of material and about the outer peripheral surface 14 of the flower pot 16. After the band 32 has been applied about the sheet of material 12 in the flower pot 16, the flower pot 16 is then moved in an upward direction 38 to remove the flower pot 16 from the object opening 30 and the flower pot opening 26. The sheet of material 12 is held in position extending about the flower pot 16 by the band 32.

### Embodiment of Figure 3

Shown in Figure 3 is a modified system 10a for securing a sheet of material about the flower pot 16 in a manner like that described before with respect to Figures 1 and 2. The system 10a includes a roll of material 40 which is supported so that material may be unrolled from the roll of material 40. The material in the roll of material 40 extends from the roll of material 40 through a pair of rollers 42 and over a portion of an upper surface 44 of a platform 46. The platform 46 includes a flower pot opening 47.

At least one of the rollers 42 is powered so that by rollingly actuating the rollers 42, the rollers 42 are rotated in the respective directions 48 and 50 as indicated in Figure 3 to move the material in a general direction 52 to a position to wherein a predetermined amount of the material has been disposed generally over the flower pot opening 47 in the platform 46. After a predetermined amount of the material has been unrolled from the roll of material 40 and positioned generally over the flower pot opening 47, a knife 54 is actuated and moved in a downward direction 56 to a position wherein the knife 54 cuttingly engages the material thereby severing a sheet of material 12a from the roll of material 40. The knife 54 is shown in Figure 3 in the cutting position.

The system 10a also includes a generally U-shaped fork 58 forming an opening 60 which is connected to one end of a bar 62. The opposite end of the bar 62 is movably connected to a post 64 so that the bar 62 may be moved in an upward direction 66 or in a downward direction 68. The bar 62 also is pivotally connected to the post 64 so that the bar 62 may be rotated in a first direction 70 and in a second direction 72.

A first hydraulic cylinder 74 is connected to the bar 62 for moving the bar 62 in the upward or the downward direction 66 or 68. A second hydraulic cylinder 76 is connected to the bar 62 for moving the bar 62 in the direction 70 or 72.

In operation, the flower pot 16 is disposed in the opening 60 of the fork 58 and supported in the fork 58. The bar 62 is moved by the hydraulic cylinder 74 and 76 to position the flower pot 16 generally over the flower pot opening 47 and over the object opening 30 in the band applicator 20. After the sheet of material 12a has been cut from the roll of material 40, the second hydraulic cylinder 76 is actuated to move the bar 62 and the flower pot 16 connected thereto in the downward direction 68 thereby moving the flower pot 16 and the sheet of material 12a through the flower pot opening 47 into the object opening 30 and the band applicator 20. The band applicator 20 then is actuated to apply the band about the sheet of material 12a and generally about the outer peripheral surface 14 of the flower pot 16 thereby securing the sheet of material 12a to the outer peripheral surface 14 of the flower pot in the manner described.

After the band has been applied to the sheet of material 12a and the flower pot 16, the second hydraulic cylinder 76 is actuated to move the bar 62 and the flower pot 16 connected thereto in the upward direction 66 to a position to wherein the flower pot 16 is positioned generally above the flower pot opening 47 generally above the upper surface 44 of the platform 46. The first hydraulic cylinder 74 is then actuated to pivotally move the bar 62 and the flower pot connected thereto in the direction 72 so the flower pot 16 with the sheet of material 12a secured thereto by the band can be removed from the fork 58 and another flower pot can be disposed in the fork 58.

Changes may be made in the construction and operation of the various components and assemblies described herein, and changes may be made in the steps or the sequence of the steps described herein without departing from the scope of the invention as defined in the following claims.

Where technical features mentioned in any claim herein are followed by reference symbols, those reference symbols are included solely for the purpose of increasing the intelligibility of the claims.

## Claims

1. A method utilizing a cover forming device (18) to form a decorative cover for a flower pot (16) and securing the decorative cover to the flower pot (16) by automatically applying a band (32) from an automatic band applicator (20) wherein the cover forming device (18) comprises a platform (22 or 46) having a support surface (24 or 44) and a flower pot opening (26 or 47) formed therethrough which intersects the support surface (24 or 44) and wherein the automatic band applicator (20) is provided with an object opening (30) for receiving at least a portion of the flower pot (16) having the decorative cover disposed thereabout such that a band (32) is automatically positioned about the decorative cover while the decorative cover is maintained in position about the flower pot (16) by the cover forming device (18), the method comprising the steps of:
providing a flower pot (16) having an outer peripheral surface (14) and an upper opening;
providing a sheet of material (12 or 12a);
disposing the sheet of material (12 or 12a) upon the support surface (24 or 44) of the platform (22 or 46) of the cover forming device (18) and over the flower pot opening (26 or 47) therein, wherein the sheet of material (12 or 12a) is supported upon the support surface (24 or 44) of the platform (22 or 46);
providing a band (32) in the band applicator (20) wherein the object opening (30) in the band applicator (20) is substantially aligned with the flower pot opening (26 or 47) in the support surface (24 or 44) of the cover forming device (18);
placing the flower pot (16) adjacent the sheet of material (12 or 12a) disposed over the flower pot opening (26 or 47) in the support surface (24 or 44) of the cover forming device (18);
moving the flower pot (16) and the sheet of material (12 or 12a) through the flower pot opening (26 or 47) in the cover forming device (18) to form the sheet of material (12 or 12a) into a decorative cover extending generally about the outer peripheral surface (14) of the flower pot (16) while permitting the opening of the flower pot (16) to remain open;
moving the flower pot (16) having the decorative cover held in place about the outer peripheral surface (14) thereof by the cover forming device (18) into the object opening (30) in the band applicator (20);
automatically applying the band (32) about the decorative cover with the band applicator (20) to secure the decorative cover about the outer peripheral surface (14) of the flower pot (16) so that the opening of the flower pot (16) remains substantially uncovered by the decorative cover while the flower pot (16) having the decorative cover extending generally about the outer peripheral surface (14) of the flower pot (16) is disposed in the object opening (30) in the band applicator (20) and held in place by the cover forming device (18); and
removing the flower pot (16) with the decorative cover secured thereto by the band (32) from the object opening (30) in the band applicator (20) and from the flower pot opening (26 or 47) in the support surface (24 or 44) of the cover forming device (18).

2. The method as claimed in Claim 1, wherein:
the cover forming device platform (22 or 46) has a flat upper support surface (24 or 44) and the platform opening (26 or 47) intersects the flat upper support surface (24 or 44); and
said disposing step includes disposing the sheet of material (12 or 12a) upon the flat upper support surface (24 or 44) of the platform (22 or 46) of the cover forming device (18) and over the platform opening (26 or 47) therein, wherein the sheet of material (12 or 12a) supported upon the flat upper support surface (24 or 44) of the platform (22 or 46) is substantially flat while being supported thereupon.

3. A method for securing a sheet of material (12 or 12a) about the outer peripheral surface (14) of a flower pot (16) wherein the flower pot (16) includes a bottom (36) and an opening extending through an upper end thereof, the method comprising:
providing the flower pot (16);
providing the sheet of material (12 or 12a);
providing a cover former (18) having an opening (26 or 47) for forming the sheet of material (12 or 12a) into a decorative cover about the flower pot (16);
providing a band applicator (20) having an object opening (30) for automatically applying a band (32);
moving the sheet of material (12 or 12a) and the flower pot (16) into the opening (26 or 47) of the cover former (18) to form the sheet of material (12 or 12a) into a decorative cover which substantially encompasses at least the outer peripheral surface (14) of the flower pot (16);
moving the flower pot (16), having the decorative cover held in place about at least the outer peripheral surface (14) of the flower pot (16) by the cover former (18), into the object opening (30) in the band applicator (20); and
automatically positioning the band (32) about the decorative cover for securing the decorative cover in position about at least the outer peripheral surface (14) of the flower pot (16) such that the opening formed through the upper end of the flower pot (16) remains substantially uncovered by the decorative cover.

4. The method as claimed in Claim 3, wherein:
the cover former (18) has a flat upper support surface (24 or 44) and the cover former opening (26 or 47) intersects the flat upper support surface (24 or 44); and
said disposing step includes disposing the sheet of material (12 or 12a) upon the flat upper support surface (24 or 44) of the cover former (18) and over the cover former opening (26 or 47) therein, wherein the sheet of material (12 or 12a) supported upon the flat upper support surface (24 or 44) of the cover former (18) is substantially flat while being supported thereupon.

5. A method as claimed in any one of the preceding claims, wherein the band (32) is applied about the decorative cover which extends upwardly from the open upper end of the flower pot (16).

6. A method as claimed in any one of the preceding claims, wherein the material (12, 12a, or 40) is a non-shape sustaining material.

7. An apparatus (10) for securing a sheet of material (12 or 12a) generally about the outer peripheral surface (14) of a flower pot (16) while permitting the opening of the flower pot (16) to remain open, the apparatus (10) comprising:
a cover forming device (18) for forming and holding the sheet of material (12 or 12a) generally about the outer peripheral surface (14) of the flower pot (16), the cover forming device (18) comprising a platform (22 or 46) having a flat upper support surface (24 or 44) and a platform opening (26 or 47) formed therethrough which intersects the support surface (24 or 44), wherein the sheet of material (12 or 12a) is disposed over the flat upper support surface (24 or 44) and over the platform opening (26 or 47), and wherein the sheet of material (12 or 12a) supported upon said surface (24) is substantially flat while being supported thereupon; and
an automatic band applicator (20) having an object opening (30) positioned near and spaced a distance from the cover forming device (18) with the object opening (30) being generally positioned with respect to the platform opening (26 or 47) whereby the flower pot (16) with the sheet of material (12 or 12a) disposed thereabout is moveable through the platform opening (26 or 47) and into the object opening (30), the band applicator (20) automatically applying a band (32) about the sheet of material (12 or 12a) disposed generally about the outer peripheral surface (14) of the flower pot (16) whereby the band (32) cooperates to secure the sheet of material (12 or 12a) in position disposed generally about the outer peripheral surface (14) of the flower pot (16) while permitting the opening of the flower pot (16) to remain open, the cover forming device (18) being disposed generally above the band applicator (20) and the flat upper support surface (24 or 44) of the cover forming device (18) supporting the sheet of material (12 or 12a) wherein the supported sheet of material (12 or 12a) is substantially flat, the cover forming device (18) thereafter forming the sheet of material (12 or 12a) generally about the outer peripheral surface (14) of the flower pot (16) when the flowerpot (16) is placed upon the sheet of material (12 or 12a) disposed over the platform opening (26 or 47) and the flower pot (16) and sheet of material (12 or 12a) are simultaneously moved into the platform opening (26 or 47), the cover forming device (18) holding the sheet of material (12 or 12a) about the outer peripheral surface (14) of the flower pot (16) prior to the flower pot (16) with the sheet of material (12 or 12a) being disposed into the object opening (30) in the band applicator (20), the cover forming device (18) holding the sheet of material (12 or 12a) generally about the outer peripheral surface (14) of the flower pot (16) and permitting the opening in the flower pot (16) to remain open while the flower pot (16) with the sheet of material (14) disposed thereabout is disposed in the object opening (30) in the band applicator (20).

## Patentansprüche

1. Verfahren, bei dem eine Umhüllungsgestaltungsvorrichtung (18) für die Gestaltung einer dekorativen Umhüllung für einen Blumentopf (16) eingesetzt wird, und wobei die dekorative Umhüllung an dem Blumentopf (16) durch automatisches Anbringen eines Bands (32) durch einen automatischen Bandapplikator (20) befestigt wird, wobei die Umhüllungsgestaltungsvorrichtung (18) eine Plattform (22 oder 46) umfaßt, die eine Trägeroberfläche (24 oder 44) aufweist, sowie mit einer dort hindurch ausgebildeten Blumentopföffnung (26 oder 47), welche die Trägeroberfläche (24 oder 44) schneidet, und wobei der automatische Bandapplikator (20) mit einer Objektöffnung (30) für die Aufnahme mindestens eines Abschnitts des Blumentopfs (16) darin vorgesehen ist, wobei um den Blumentopf herum die dekorative Umhüllung angeordnet ist, so daß ein Band (32) automatisch um die dekorative Umhüllung positioniert wird, während die dekorative Umhüllung durch die Umhüllungsgestaltungsvorrichtung (18) an einer Position um den Blumentopf (16) herum gehalten wird, wobei das Verfahren die folgenden Schritte umfaßt:
Bereitstellen eines Blumentopfs (16) mit einer äußeren peripheren Oberfläche (14) und einer oberen Öffnung;
Bereitstellen einer Materialbahn (12 oder 12a);
Anordnen der Materialbahn (12 oder 12a) auf der Trägeroberfläche (24 oder 44) der Plattform (22 oder 46) der Umhüllungsgestaltungsvorrichtung (18) sowie über der darin vorgesehenen Blumentopföffnung (26 oder 47), wobei die Materialbahn (12 oder 12a) auf der Trägeroberfläche (24 oder 44) der Plattform (22 oder 46) getragen wird;
Bereitstellen eines Bands (32) in dem Bandapplikator (20), wobei die Objektöffnung (30) in dem Bandapplikator (20) im wesentlichen mit der Blumentopföffnung (26 oder 47) in der Trägeroberfläche (24 oder 44) der Umhüllungsgestaltungsvorrichtung (18) ausgerichtet ist;
Positionieren des Blumentopfes (16) angrenzend an eine Materialbahn (12 oder 12a), die sich über der Blumentopföffnung (26 oder 47) in der Trägeroberfläche (24 oder 44) der Umhüllungsgestaltungsvorrichtung (18) befindet;
Bewegen des Blumentopfs (16) und der Materialbahn (12 oder 12a) durch die Blumentopföffnung (26 oder 47) in der Umhüllungsgestaltungsvorrichtung (18), so daß die Materialbahn (12 oder 12a) zu einer dekorativen Umhüllung gestaltet wird, die sich allgemein um die äußere periphere Oberfläche (14) des Blumentopfs (16) erstreckt, wobei die Öffnung des Blumentopfs (16) offen gelassen wird;
Bewegen des Blumentopfs (16), bei dem die dekorative Umhüllung durch die Umhüllungsgestaltungsvorrichtung (18) an der um die äußere periphere Oberfläche (14) angeordneten Verwendungsposition gehalten wird, in die Objektöffnung (30) in dem Bandapplikator (20);
Automatisches Anbringen des Bands (32) durch den Bandapplikator (20) um die dekorative Umhüllung, um die dekorative Umhüllung um die äußere periphere Oberfläche (14) des Blumentopfs (16) zu befestigen, so daß die Öffnung des Blumentopfs (16) durch die dekorative Umhüllung im wesentlichen nicht bedeckt wird, während sich der Blumentopf (16) mit der sich allgemein um die äußere periphere Oberfläche (14) des Blumentopfs (16) erstreckenden dekorativen Umhüllung in der Objektöffnung (30) in dem Bandapplikator (20) befindet und durch die Umhüllungsgestaltungsvorrichtung (18) an der Verwendungsposition gehalten wird; und
Entfernen des Blumentopfs (16) mit der durch das Band (32) an diesem befestigten dekorativen Umhüllung aus der Objektöffnung (30) in dem Bandapplikator (20) sowie aus der Blumentopföffnung (26 oder 47) in der Trägeroberfläche (24 oder 44) der Umhüllungsgestaltungsvorrichtung (18).

2. Verfahren nach Anspruch 1, wobei:
die Plattform (22 oder 46) der Umhüllungsgestaltungsvorrichtung eine flache obere Trägeroberfläche (24 oder 44) aufweist, und wobei die Plattformöffnung (26 oder 47) die flache obere Trägeroberfläche (24 oder 44) schneidet; und
wobei der genannte Anordnungsschritt die Anordnung der Materialbahn (12 oder 12a) auf der flachen oberen Trägeroberfläche (24 oder 44) der Plattform (22 oder 46) der Umhüllungsgestaltungsvorrichtung (18) sowie über der darin vorgesehenen Plattformöffnung (26 oder 47) umfaßt, wobei die auf der flachen oberen Trägeroberfläche (24 oder 44) der Plattform (22 oder 46) getragene Materialbahn (12 oder 12a) während sie getragen wird im wesentlichen flach ist.

3. Verfahren zur Sicherung einer Materialbahn (12 oder 12a) um die äußere periphere Oberfläche (14) eines Blumentopfs (16), wobei der Blumentopf (16) einen Boden (36) aufweist sowie eine sich durch ein oberes Ende erstreckende Öffnung, wobei das Verfahren die folgenden Schritte umfaßt:
Bereitstellen des Blumentopfs (16);
Bereitstellen der Materialbahn (12 oder 12a);
Bereitstellen einer Umhüllungsgestaltungsvorrichtung (18) mit einer Öffnung (26 oder 47) zur Gestaltung der Materialbahn (12 oder 12a) zu einer dekorativen Umhüllung um den Blumentopf (16);
Bereitstellen eines Bandapplikators (20) mit einer Objektöffnung (30) zur automatischen Anbringung eines Bands (32);
Bewegen der Materialbahn (12 oder 12a) und des Blumentopfs (16) in die Öffnung (26 oder 47) der Umhüllungsgestaltungsvorrichtung (18), um die Materialbahn (12 oder 12a) zu einer dekorativen Umhüllung zu gestalten, die im wesentlichen mindestens die äußere periphere Oberfläche (14) des Blumentopfs (16) umgibt;
Bewegen des Blumentopfs (16), bei dem die dekorative Umhüllung durch die Umhüllungsgestaltungsvorrichtung (18) an der zumindest um die äußere periphere Oberfläche (14) des Blumentopfs (16) angeordneten Verwendungsposition gehalten wird, in die Objektöffnung (30) in dem Bandapplikator (20); und
Automatisches Positionieren des Bands (32) um die dekorative Umhüllung, um die dekorative Umhüllung an der Verwendungsposition um mindestens die äußere periphere Oberfläche (14) des Blumentopfs (16) zu sichern, so daß die durch das obere Ende des Blumentopfs (16) ausgebildete Öffnung durch die dekorative Umhüllung im wesentlichen unbedeckt bleibt.

4. Verfahren nach Anspruch 3, wobei:
die Umhüllungsgestaltungsvorrichtung (18) eine flache obere Trägeroberfläche (24 oder 44) aufweist, und wobei die Öffnung (26 oder 47) der Umhüllungsgestaltungsvorrichtung die flache obere Trägeroberfläche (24 oder 44) schneidet; und
wobei der genannte Anordnungsschritt die Anordnung der Materialbahn (12 oder 12a) auf der flachen oberen Trägeroberfläche (24 oder 44) der Umhüllungsgestaltungsvorrichtung (18) sowie über der darin vorgesehenen Öffnung (26 oder 47) der Umhüllungsgestaltungsvorrichtung aufweist, wobei die auf der flachen oberen Trägeroberfläche (24 oder 44) der Umhüllungsgestaltungsvorrichtung (18) getragene Materialbahn (12 oder 12a) während sie getragen wird im wesentlichen flach ist.

5. Verfahren nach einem der vorstehenden Ansprüche, wobei das Band (32) um die dekorative Blumentopfumhüllung angebracht wird, die sich von dem oberen Ende des Blumentopfs (16) nach oben erstreckt.

6. Verfahren nach einem der vorstehenden Ansprüche, wobei es sich bei dem Material (12, 12a oder 40) um ein die Form nicht haltendes Material handelt.

7. Vorrichtung (10) zur Sicherung einer Materialbahn (12 oder 12a) allgemein um die äußere periphere Oberfläche (14) eines Blumentopfs (16), wobei die Öffnung des Blumentopfs (16) offen gelassen wird, wobei die Vorrichtung (10) folgendes umfaßt:
eine Umhüllungsgestaltungsvorrichtung (18) zur Gestaltung und zum Halten der Materialbahn (12 oder 12a) allgemein um die äußere periphere Oberfläche (14) des Blumentopfs (16), wobei die Umhüllungsgestaltungsvorrichtung (18) eine Plattform (22 oder 46) umfaßt, die eine flache obere Trägeroberfläche (24 oder 44) sowie eine dadurch ausgebildete Plattformöffnung (26 oder 47) aufweist, die die Trägeroberfläche (24 oder 44) schneidet, wobei die Materialbahn (12 oder 12a) über der flachen oberen Trägeroberfläche (24 oder 44) sowie über der Plattformöffnung (26 oder 47) angeordnet wird, und wobei die auf der genannten Oberfläche (24) getragene Materialbahn (12 oder 12a) während sie auf dieser Oberfläche getragen wird im wesentlichen flach ist; und
einen automatischen Bandapplikator (20) mit einer Objektöffnung (30), die mit Zwischenabstand nahe der Umhüllungsgestaltungsvorrichtung (18) angeordnet ist, wobei die Objektöffnung (30) allgemein im Verhältnis zu der Plattformöffnung (26 oder 47) angeordnet ist, wobei der Blumentopf (16) mit der darum angeordneten Materialbahn (12 oder 12a) durch die Plattformöffnung (26 oder 47) und in die Objektöffnung (30) bewegt werden kann, wobei der Bandapplikator (20) automatisch ein Band (32) um die Materialbahn (12 oder 12a) anbringt, und zwar allgemein um die äußere periphere Oberfläche (14) des Blumentopfs (16) angeordnet, wobei das Band (32) derart zusammenwirkt, daß die Materialbahn (12 oder 12a) an einer Position gesichert wird, die sich allgemein um die äußere periphere Oberfläche (14) des Blumentopfs (16) befindet, wobei die Öffnung des Blumentopfs (16) offen gelassen wird, wobei die Umhüllungsgestaltungsvorrichtung (18) allgemein über dem Bandapplikator (20) angeordnet ist, und wobei die flache obere Trägeroberfläche (24 oder 44) der Umhüllungsgestaltungsvorrichtung (18) die Materialbahn (12 oder 12a) trägt, wobei die getragene Materialbahn (12 oder 12a) im wesentlichen flach ist, wobei die Umhüllungsgestaltungsvorrichtung (18) die Materialbahn (12 oder 12a) danach allgemein um die äußere periphere Oberfläche (14) des Blumentopfs (16) gestaltet, wenn der Blumentopf (16) auf der Materialbahn (12 oder 12a) plaziert wird, die sich über der Plattformöffnung (26 oder 47) befindet, und wobei der Blumentopf (16) und die Materialbahn (12 oder 12a) gleichzeitig in die Plattformöffnung (26 oder 47) bewegt werden, wobei die Umhüllungsgestaltungsvorrichtung (18) die Materialbahn (12 oder 12a) um die äußere periphere Oberfläche (14) des Blumentopfs (16) hält, bevor der Blumentopf (16) mit der Materialbahn (12 oder 12a) in der Objektöffnung (30) in dem Bandapplikator (20) angeordnet wird, wobei die Umhüllungsgestaltungsvorrichtung (18) die Materialbahn (12 oder 12a) allgemein um die äußere periphere Oberfläche (14) des Blumentopfs (16) hält und die Öffnung in dem Blumentopf (16) offen läßt, während der Blumentopf (16) mit der sich darum befindenden Materialbahn (14) in der Objektöffnung (30) in dem Bandapplikator (20) angeordnet wird.

## Revendications

1. Procédé utilisant un dispositif de formation de revêtement (18) pour former un revêtement décoratif d'un pot de fleurs (16) et fixer le revêtement décoratif au pot de fleurs (16) par application automatique d'une bande (32) venant d'un applicateur automatique de bande (20), dans lequel le dispositif de formation de revêtement (18) comprend une plate-forme (22 ou 46) comportant une surface de support (24 ou 44) et une ouverture pour pot de fleurs (26 ou 47) ménagée à travers la plate-forme et en intersection avec la surface de support (24 ou 44), et dans lequel l'applicateur de bande automatique (20) comporte un logement d'objet (30) pour recevoir au moins une partie du pot de fleurs (16) autour duquel est disposé le revêtement décoratif, de sorte qu'une bande (32) est automatiquement positionnée autour du revêtement décoratif pendant que le revêtement décoratif est maintenu en position autour du pot de fleurs (16) par le dispositif de formation de revêtement (18), le procédé comprenant les étapes de :
préparation d'un pot de fleurs (16) ayant une surface périphérique extérieure (14) et une ouverture supérieure ;
préparation d'une feuille de matière (12 ou 12a) ;
disposition de la feuille de matière (12 ou 12a) sur la surface de support (24 ou 44) de la plate-forme (22 ou 46) du dispositif de formation de revêtement (18) et au-dessus de l'ouverture du pot de fleurs (26 ou 47), de sorte que la feuille de matière (12 ou 12a) est supportée sur la surface de support (24 ou 44) de la plate-forme (22 ou 46) ;
préparation d'une bande (32) dans l'applicateur de bande (20) de sorte que le logement d'objet (30) dans l'applicateur de bande (20) est sensiblement aligné avec l'ouverture de pot de fleurs (26 ou 47) dans la surface de support (24 ou 44) du dispositif de formation de revêtement (18).
mise en place du pot de fleurs (16) près de la feuille de matière (12 ou 12a) disposée au-dessus de l'ouverture de pot de fleurs (26 ou 47) dans la surface de support (24 ou 44) du dispositif de formation de revêtement (18) ;
déplacement du pot de fleurs (16) et de la feuille de matière (12 ou 12a) à travers l'ouverture de pot de fleurs (26 ou 47) dans le dispositif de formation de revêtement (18) afin de transformer la feuille de matière (12 ou 12a) en un revêtement décoratif s'étendant sensiblement autour de la surface périphérique extérieure (14) du pot de fleurs (16) tout en permettant à l'ouverture du pot de fleurs (16) de rester ouverte ;
déplacement du pot de fleurs (16), portant le revêtement décoratif maintenu en place autour de sa surface périphérique extérieure (14) par le dispositif de formation de revêtement (18), de sorte qu'il pénètre dans le logement d'objet (30) de l'applicateur de bande (20) ;
application automatique de la bande (32) autour du revêtement décoratif avec l'applicateur de bande (20) pour fixer le revêtement décoratif autour de la surface périphérique extérieure (14) du pot de fleurs (16) de sorte que l' ouverture du pot de fleurs (16) reste sensiblement non couverte par le revêtement décoratif tandis que le pot de fleurs (16) portant le revêtement décoratif s'étendant sensiblement autour de la surface périphérique extérieure (14) du pot de fleurs (16) est disposé dans le logement d'objet (30) de l'applicateur de bande (20) et maintenu en place par le dispositif de formation de revêtement (18) ; et
enlèvement du pot de fleurs (16), auquel le revêtement décoratif est fixé par la bande (32), hors du logement d'objet (30) de l'applicateur de bande (20) et hors de l'ouverture de pot de fleurs (26 ou 47) dans la surface de support (24 ou 44) du dispositif de formation de revêtement (18).

2. Procédé selon la revendication 1, dans lequel :
la plate-forme (22 ou 46) du dispositif de formation de revêtement présente une surface de support supérieure plane (24 ou 44) et l'ouverture (26 ou 47) de la plate-forme est en intersection avec la surface de support supérieure plane (24 ou 44) ; et
ladite étape de disposition comprend la disposition de la feuille de matière (12 ou 12a) sur la surface de support supérieure plane (24 ou 44) de la plate-forme (22 ou 46) du dispositif de formation de revêtement (18) et sur l'ouverture (26 ou 47) de la plate-forme, de sorte que la feuille de matière (12 ou 12a) supportée sur la surface de support supérieure plane (24 ou 44) de la plate-forme (22 ou 46) est sensiblement à plat pendant qu'elle est ainsi supportée.

3. Procédé de fixation d'une feuille de matière (12 ou 12a) autour de la surface périphérique extérieure (14) d'un pot de fleurs (16), dans lequel le pot de fleurs (16) comprend un fond (36) et une ouverture s'étendant à travers son extrémité supérieure, le procédé comprenant :
la préparation du pot de fleurs (16) ;
la préparation de la feuille de matière (12 ou 12a) ;
la préparation d'un dispositif de formation de revêtement (18) ayant une ouverture (26 ou 47) pour transformer la feuille de matière (12,12a) en un revêtement décoratif autour du pot de fleurs (16) ;
la préparation d'un applicateur de bande (20) ayant un logement d'objet (30), pour appliquer automatiquement une bande (32) ;
le déplacement de la feuille de matière (12 ou 12a) et du pot de fleurs (16) dans le logement (26 ou 47) du dispositif de formation de revêtement (18) afin de transformer la feuille de matière (12 ou 12a) en un revêtement décoratif qui entoure sensiblement au moins la surface périphérique extérieure (14) du pot de fleurs (16) ;
l'introduction du pot de fleurs (16), portant le revêtement décoratif tenu en place autour d'au moins la surface périphérique extérieure (14) du pot de fleurs (16) par le dispositif de formation de revêtement (18), dans le logement d'objet (30) de l'applicateur de bande (20) ; et
la mise en place automatique de la bande (32) autour du revêtement décoratif pour fixer le revêtement décoratif en position autour d'au moins la surface périphérique extérieure (14) du pot de fleurs (16) de sorte que l'ouverture formée à travers l'extrémité supérieure du pot de fleurs (16) reste sensiblement non couverte par le revêtement décoratif.

4. Procédé selon la revendication 3, dans lequel :
le dispositif de formation de revêtement (18) présente une surface de support supérieure plane (24 ou 44) et l'ouverture du dispositif de formation de revêtement (26 ou 47) est en intersection avec la surface de support supérieure plane (24 ou 44) ; et
ladite étape de disposition comprend la disposition de la feuille de matière (12 ou 12a) sur la surface de support supérieure plane (24 ou 44) du dispositif de formation de revêtement (18) et au-dessus de l'ouverture (26 ou 47) du dispositif de formation de revêtement, de sorte que la feuille de matière (12 ou 12a) supportée sur la surface de support supérieure plane (24 ou 44) du dispositif de formation de revêtement (18) est sensiblement à plat pendant qu'elle est ainsi supportée.

5. Procédé selon une quelconque des revendications précédentes, dans lequel la bande (32) est appliquée autour du revêtement décoratif qui s'étend vers le haut à partir de l'extrémité supérieure ouverte du pot de fleurs (16).

6. Procédé selon une quelconque des revendications précédentes, dans lequel la matière (12,12a ou 40) est une matière ne conservant pas la forme.

7. Appareil (10) pour fixer une feuile de matière (12 ou 12a) sensiblement autour de la surface périphérique extérieure (14) d'un pot de fleurs (16) tout en permettant à l'ouverture du pot de fleurs (16) de rester ouverte, l'appareil (10) comprenant :
un dispositif de formation de revêtement (18) pour former et tenir la feuille de matière (12 ou 12a) sensiblement autour de la surface périphérique extérieure (14) du pot de fleurs (16), le dispositif de formation de revêtement (18) comprenant une plate-forme (22 ou 46) ayant une surface de support supérieure plane (24 ou 44) et une ouverture de plate-forme (26 ou 47) formée à travers la plate-forme et en intersection avec la surface de support (24 ou 44) de sorte que la feuille de matière (12 ou 12a) est disposée au-dessus de la surface de support supérieure plane (24 ou 44) et au-dessus de l'ouverture de plate-forme (26 ou 47) et de sorte que la feuille de matière (12 ou 12a) supportée sur ladite surface (24) est sensiblement à plat pendant qu'elle est ainsi supportée ; et
un applicateur automatique de bande (20) ayant un logement d'objet (30) placé au voisinage et à une certaine distance du dispositif de formation de revêtement (18), le logement d'objet (30) étant sensiblement placé par rapport à l'ouverture de plate-forme (26 ou 47) de sorte que le pot de fleurs (16) avec la feuille de matière (12 ou 12a) disposée autour de lui est déplaçable à travers l'ouverture de plate-forme (26 ou 47) et dans le logement d'objet (30), l'applicateur de bande (20) appliquant automatiquement une bande (32) autour de la feuille de matière (12 ou 12a) disposée sensiblement autour de la surface périphérique extérieure (14) du pot de fleurs (16) de sorte que la bande (32) coopère à la fixation de la feuille de matière (12 ou 12a) en position sensiblement autour de la surface périphérique extérieure (14) du pot de fleurs (16) tout en permettant à l'ouverture du pot de fleurs (16) de rester ouverte, le dispositif de formation de revêtement (18) étant disposé sensiblement au-dessus de l'applicateur de bande (20) et la surface de support supérieure plane (24 ou 44) du dispositif de formation de revêtement (18) supportant la feuille de matière (12 ou 12a) de sorte que la feuille de matière supportée (12 ou 12a) est sensiblement à plat, le dispositif de formation de revêtement (18) formant ensuite la feuille de matière (12 ou 12a) sensiblement autour de la surface périphérique extérieure (14) du pot de fleurs (16) lorsqu'on place le pot de fleurs (16) sur la feuille de matière (12 ou 12a) disposée au-dessus de l'ouverture de plate-forme (26 ou 47) et on déplace simultanément le pot de fleurs (16) et la feuille de matière (12 ou 12a) dans l'ouverture de plate-forme (26 ou 47), le dispositif de formation de revêtement (18) tenant la feuille de matière (12 ou 12a) autour de la surface périphérique extérieure (14) du pot de fleurs (16) avant que le pot de fleurs (16) avec la feuille de matière (12 ou 12a) soit introduit dans le logement d'objet (30) de l'applicateur de bande (20), le dispositif de formation de revêtement (18) tenant la feuille de matière (12 ou 12a) sensiblement autour de la surface périphérique extérieure (14) du pot de fleurs (16) et permettant à l'ouverture du pot de fleurs (16) de rester ouverte pendant que le pot de fleurs (16) avec la feuille de matière (14) disposée autour de lui est placé dans le logement d'objet (30) de l'applicateur de bande (20).
